# DEMANDE DE BREVET EUROPEEN

(11) **EP 0 727 341 A1**
(43) Date de publication de la demande: **21.08.1996**
(21) Numéro de dépôt: 96400262.0
(22) Date de dépôt: 07.02.1996
(51) Int. Cl.: B62D 1/16

(54) **Dispositif de blocage temporaire en position d'une chape par rapport à une fourche d'un arbre de direction de véhicule automobile**

(30) Priorité: 17.02.1995 FR 9501876
(71) Demandeur: ECIA - EQUIPEMENTS ET COMPOSANTS POUR L'INDUSTRIE AUTOMOBILE, F-25400 Audincourt (FR)
(72) Inventeur: Passebecq, Ghislain, F-25400 Audincourt (FR)
(74) Mandataire: Habasque, Etienne Joel Jean-François

(57) **Abrégé**

Ce dispositif de blocage temporaire en position d'une chape (3) raccordée par des moyens d'articulation à la cardan (4) à une fourche (2) d'un arbre de direction (1) de véhicule automobile, est caractérisé en ce qu'il comporte un organe de blocage (5) comprenant des moyens élastiques d'accrochage (6) sur la fourche et des moyens de butée (7) adaptés pour coopérer avec des moyens complémentaires de la chape pour la bloquer en position.

## Description

La présente invention concerne un dispositif de blocage temporaire en position d'une chape raccordée par des moyens d'articulation à la cardan à une fourche d'un arbre de direction de véhicule automobile.

On sait que les ensembles de colonne de direction de véhicules automobiles comportent un ou plusieurs arbres de direction dont les extrémités sont munies de fourches de raccordement de ceux-ci les uns aux autres et au reste du mécanisme de direction du véhicule, par l'intermédiaire de moyens d'articulation à la cardan et de chapes de raccordement.

Cependant, le montage de ces arbres présente un certain nombre d'inconvénients car la chape étant libre de se déplacer par rapport à l'arbre, elle gène le montage de celui-ci.

Le but de l'invention est donc de résoudre ces problèmes.

A cet effet, l'invention a pour objet un dispositif de blocage temporaire en position d'une chape raccordée par des moyens d'articulation à la cardan à une fourche d'un arbre de direction de véhicule automobile, caractérisé en ce qu'il comporte un organe de blocage comprenant des moyens élastiques d'accrochage sur la fourche et des moyens de butée adaptés pour coopérer avec des moyens complémentaires de la chape pour la bloquer en position.

L'invention sera mieux comprise à la lecture de la description qui va suivre, donnée uniquement à titre d'exemple et faite en se référant aux dessins annexés, sur lesquels :
- la Fig.1 représente une vue de côté schématique illustrant un exemple de réalisation d'un dispositif de blocage selon l'invention en position de blocage d'une chape; et
- la Fig.2 représente une vue en perspective d'un organe de blocage entrant dans la constitution d'un dispositif de blocage selon l'invention.

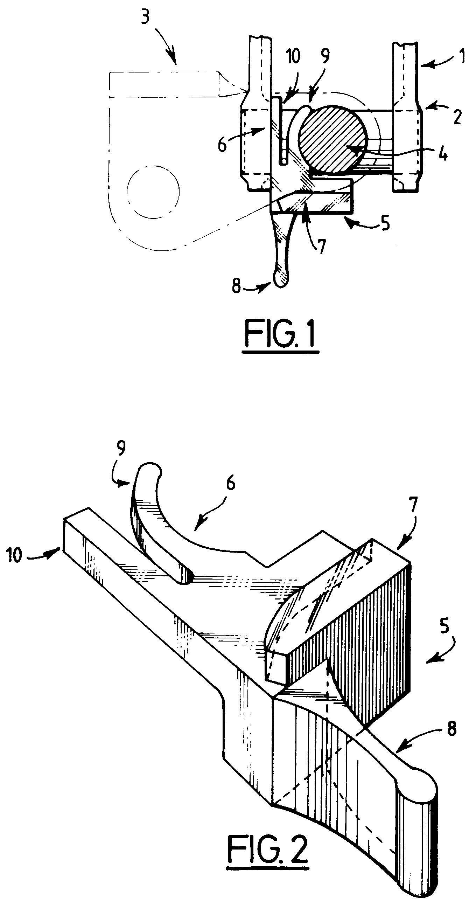

On reconnaît sur la figure 1, une portion d'arbre de direction désignée par la référence générale 1 à l'extrémité de laquelle est formée une fourche 2.

Une chape 3 est raccordée à cette fourche 2 par l'intermédiaire de moyens d'articulation à la cardan désignés de façon générale par la référence 4.

Cette structure étant bien connue dans l'état de la technique, on ne la décrira pas plus en détail.

Le dispositif selon l'invention, de blocage temporaire en position de la chape 3 par rapport à l'arbre de direction 1, comporte un organe de blocage désigné par la référence générale 5 sur ces figures, cet organe de blocage comprenant des moyens élastiques 6 d'accrochage de cet organe sur la fourche, des moyens de butée 7 adaptés pour coopérer avec des moyens complémentaires de la chape pour la bloquer en position. De plus, cet organe comporte également par exemple des moyens 8 de préhension permettant la manipulation de cet organe par un utilisateur.

Dans l'exemple de réalisation représenté sur ces figures, les moyens d'accrochage 6 de l'organe 5 comprennent deux branches de celui-ci, désignées par les références 9 et 10, l'une 10 des ces branches étant adaptée pour venir en appui sur l'une des ailes de la fourche, tandis que l'autre branche 9 présente une forme courbée et une certaine élasticité et est adaptée pour s'engager par exemple autour de l'une des douilles des moyens d'articulation à la cardan, pour assurer l'accrochage élastique de cet organe sur cette fourche.

Les moyens de butée de cet organe, désignés par la référence générale 7, sont quant à eux formés par exemple un épaulement en saillie de cet organe, cet épaulement en saillie étant adapté pour coopérer avec une partie complémentaire de la chape 3 pour l'immobiliser en position, par exemple de montage de l'arbre lorsque l'organe est accroché sur la fourche.

Dans cet exemple de réalisation, la chape est maintenue à peu près à 90° par rapport à l'axe de l'arbre. Il va de soi que d'autres positions peuvent être envisagées et que la chape peut être maintenue dans une autre position angulaire déterminée, facilitant son montage et son raccordement dans le véhicule.

Les moyens de préhension 8 sont quant à eux formés par exemple par un doigt de préhension en saillie permettant à un utilisateur d'engager et de dégager cet organe de blocage dans et de la fourche.

On conçoit alors que les moyens d'accrochage permettent de maintenir cet organe en position par rapport à la fourche et donc la chape en position rabattue, ce qui facilite le transport de cet arbre, réduit les risques de dégradations de celui-ci et facilite le montage de cet arbre en position dans le véhicule, en réduisant sa longueur lors de ce montage.

Lors de ce montage ou une fois celui-ci réalisé, l'opérateur de montage retire l'organe de blocage libérant ainsi la chape.

Dans l'exemple de réalisation illustré, l'organe est par exemple formé d'une seule pièce par moulage en matière plastique.

Il va de soi bien entendu que différents modes de réalisation de cet organe peuvent être envisagés.

Ainsi par exemple, cet organe peut ne pas comporter de moyens de manipulation, le retrait de celui-ci se faisant par manipulation de la chape, ce qui provoque une extraction automatique de cet organe.

Bien entendu, la chape peut être une chape de raccordement de l'arbre au reste du mécanisme de direction du véhicule ou une chape prévue à l'extrémité d'un autre arbre comme c'est le cas par exemple des arbres supérieur et inférieur des colonnes de direction de véhicules automobiles.

## Revendications

1. Dispositif de blocage temporaire en position d'une chape (3) raccordée par des moyens d'articulation à la cardan (4) à une fourche (2) d'un arbre de direction (1) de véhicule automobile, caractérisé en ce qu'il comporte un organe de blocage (5) comprenant des moyens élastiques d'accrochage (6) sur la fourche et des moyens de butée (7) adaptés pour coopérer avec des moyens complémentaires de la chape pour la bloquer en position.

2. Dispositif selon la revendication 1, caractérisé en ce que l'organe de blocage (5) comporte des moyens de préhension (8) par un utilisateur.

3. Dispositif selon la revendication 1 ou 2, caractérisé en ce que les moyens élastiques d'accrochage comprennent deux branches (9,10) de cet organe, adaptées pour s'engager élastiquement entre une aile de la fourche et les moyens d'articulation à la cardan.

4. Dispositif selon la revendication 1, 2 ou 3, caractérisé en ce que les moyens de butée de l'organe comprennent un épaulement (7) de celui-ci.

5. Dispositif selon l'une quelconque des revendications précédentes, caractérisé en ce que les moyens de préhension comprennent un doigt de préhension (8).
